# NEUE EUROPÄISCHE PATENTSCHRIFT

(11) **EP 1 471 086 B2**
(45) Veröffentlichungstag und Bekanntmachung des Hinweises auf die Entscheidung über den Einspruch: **14.06.2017**
(45) Hinweis auf die Patenterteilung: 05.08.2009
(21) Anmeldenummer: 04002510.8
(22) Anmeldetag: 05.02.2004
(51) Int. Cl.: C08G 18/10, C08G 18/48, C08J 9/08

(54) **Verfahren zur Herstellung von Polyurethan-Weichschaumstoffen**
Process for the preparation of flexible polyurethane foams
Procédé pour la préparation de mousses souples de polyuréthane

(30) Priorität: 31.03.2003 DE 10314762
(43) Veröffentlichungstag der Anmeldung: 27.10.2004
(73) Patentinhaber: BASF SE, 67056 Ludwigshafen am Rhein (DE)
(72) Erfinder: Lutter, Heinz-Dieter, Dr., 49356 Diepholz (DE); Eling, Berend, Dr., 49488 Lemförde (DE); Müller, Jens, 49084 Osnarbrück (DE); Bruchmann, Bernd, Dr., 67251 Freinsheim (DE); Wagner, Klaus, 49419 Wagenfeld (DE)
(74) Vertreter: BASF IP Association

(56) Entgegenhaltungen:
- EP-A1- 0 022 617
- EP-B- 0 485 953
- EP-B- 0 676 434
- EP-B1- 0 547 764
- EP-B1- 0 566 248
- EP-B1- 0 701 578
- WO-A1-01/60884
- CA-A1- 2 164 467
- CA-A1- 2 461 190
- US-A- 5 494 941
- US-A- 6 096 238

## Beschreibung

Die Erfindung betrifft ein Verfahren zur Herstellung von hochelastischen Polyurethan-Weichschaumstoffen.

Hochelastische Polyuhrethanschaumstoffe, häufig auch als HR-Schaumstoffe bezeichnet, sind seit langem bekannt und vielfach beschrieben, beispielsweise im Kunststoffhandbuch, Band 7 "Polyurethane", Carl Hanser Verlag München, 3. Auflage 1993.

Die Herstellung dieser Schaumstoffe erfolgt üblicherweise durch Umsetzung von Polyisocyanaten, vorzugsweise Diisocyanaten, mit Polyolen in Anwesenheit von Treibmitteln, Katalysatoren sowie gegebenenfalls üblichen Hilfsund/oder Zusatzstoffen. Als Polyisocyanate kommen insbesondere Toluylendiisocyanat (TDI) und/oder Diphenylmet handiisocyanat (MDI), gegebenenfalls im Gemisch mit Polyphenylen-Polymethylen-Polyisocyanaten (Roh-MDI), zum Einsatz. Als Polyole werden zumeist Polyetheralkohole und/oder Polyesteralkohole eingesetzt.

Als Treibmittel wird in jüngerer Zeit zunehmend Wasser verwendet, das mit den Isocyanatgruppen unter Freisetzung von Kohlendioxid reagiert. Es hat sich gezeigt, dass sich flüssige aromatische Isoyanate, die in der Regel unpolare Moleküle darstellen, nur unzureichend mit Wasser mischen. Das führt zu einer Verzögerung und einem teilweise unvollständigen Ablauf der Reaktion. Insbesondere bei der Herstellung von Blockweichschaumstoffen kommt es dadurch zur Ausbildung von Hohlräumen, sogenannten Lunkern, im Schaum. Außerdem können Nachteile bei den mechanischen Eigenschaften der Schaumstoffe, insbesondere bei der Elastizität, auftreten. Weiterhin sind die Start- und die Abbindezeit bei der Herstellung der Schaumstoffe aufgrund der verringerten Mischbarkeit zwischen Wasser und den unpolaren Reaktionskomponenten häufig verzögert.

Es sind eine Reihe von Verfahren zur Herstellung von Polyurethan-Weichschaumstoffen bekannt, bei denen Wasser als Treibmittel verwendet wird.

So beschreibt DE 15 20 737 ein Verfahren zur Herstellung von Polyurethan-Weichschaumstoffen durch Umsetzung von Polyisocyanaten mit Polyoxypropylen-Polyoxyethylen-Polyethertriolen, die als Endblock 3 bis 5 Gew.-% Ethylenoxid gebunden enthalten.

In GB 1,079,105 wird ein Verfahren zur Herstellung von sehr weichen Polyurethan-Weichschaumstoffen beschrieben, bei dem die Polyolkomponente ein Polyetherpolyol oder eine Mischung aus Polyetherpolyolen enthält, die aus einem difunktionellen und einem trifunktionellen mit einer Hydroxylzahl im Bereich zwischen 70 und 170 mgKOH/g und als Polyisocyanat vorzugsweise Toluylendiisocyanat (TDI) eingesetzt wird. Um die gewünschten Eigenschaften zu erhalten, wird jedoch als Treibmittel neben Wasser auch ein physikalisches Treibmittel eingesetzt.

EP 676 434 beschreibt unpolare Prepolymere auf Basis von MDI und trifunktionellen Polyoxyalkylenpolyolen, die zu hochelastischen Polyurethan-Weichschaumstoffen weiterverarbeitet werden können.

EP 485 953 beschreibt ein Verfahren zur Herstellung von Polyurethan-Weichschaumstoffen mit verbesserter Reißdehnung, die unter Verwendung von trifunktionellen Polyetheralkoholen mit einem Gehalt an Ethylenoxid von 40 bis 68 %, das in einer statistischen Verteilung mit Propylenoxid vorliegt.

In EP 10 850 wird ein Verfahren zur Herstellung von wassergetriebenen Polyurethan-Weichschaumstoffen beschrieben, bei dem ein Prepolymer aus reinem 2-Kern-MDI hergestellt und dieses vor der Umsetzung zum Polyurethan mit Polymer-MDI abgemischt wird.

In EP 555 742 wird ein Verfahren zur Herstellung von Polyurethan-Weichschaumstoffen beschrieben, bei dem als Polyolkomponente zwei Polyetheralkohole eingesetzt werden, von denen einer mindestens 10 % Ethylenoxid-Einheiten in der Kette enthalten muß.

Keines der genanten Verfahren kann das Problem der schlechten Mischbarkeit des Wassers im Schaumsystem mit den damit verbundenen, eingangs dargestellten Nachteilen lösen.

Aufgabe der Erfindung war es, ein Verfahren zur Herstellung von Polyurethan-Weichschaumstoffen, insbesondere Blockweichschaumstoffen, zu entwickeln, bei dem eine gute Homogenisierung des als Treibmittel verwendeten
Wassers in den Ausgangskomponenten erfolgt, das eine kurze Start- und Abbindezeit zeigt und zu lunkerfreien Schaumstoffen mit guten mechanischen Eigenschaften, insbesondere mit Rückprallelastizitäten von > 60%, ermittelt nach dem Pendeltest an weichelastischen Schäumen der DIN 53573, führt-.

Die Aufgabe konnte überraschenderweise gelöst werden, indem als Isocyanatkomponente bei der Herstellung der Schaumstoffe eine Mischung aus zwei Prepolymeren verwendet wird, von denen eines durch Umsetzung von MDI mit einem Unterschuss eines polaren Polyetherpolyols und eines durch Umsetzung von MDI mit einem Unterschuss eines unpolaren Polyetherpolyols hergestellt wurde.

Polare Polyetherpolyole im Sinne der vorliegenden Erfindung sind Polyoxyetheylen-Polyoxypropylen-Polyole mit einem Gehalt an Ethylenoxid in der Polyetherkette von mindestens 60 Gew.-%, insbesondere 60 bis 80 Gew.-%, vorzugsweise 60 bis 70 Gew.-%.

Unpolare Polyetherpolyole im Sinne der vorliegenden Erfindung sind Polyoxypropylen-Polyole und Polyoxyetheylen-Polyoxypropylen-Polyole mit einem Gehalt an Ethylenoxid in der Polyetherkette im Bereich von maximal 10 Gew.-%, wobei die Hydroxylzahl des Polyoxypropylen-Polyols oder eines Polyoxyethylen-Polyoxypropylen-Polyols mit einem Gehalt an Ethylenoxid in der Polyetherkette im Bereich von maximal 10 Gew.-% zwischen 30 und 60 mg KOH/g liegt.

Gegenstand der Erfindung ist demzufolge ein Verfahren zur Herstellung von Polyurethan-Weichschaumstoffen durch Umsetzung von
a) Polyisocyanaten mit
b) Verbindungen mit mindestens zwei mit Isocyanatgruppen reaktiven Wasserstoffatomen in Gegenwart von
c) Wasser als Treibmittel,
dadurch gekennzeichnet, dass als Polyisocyanate a) eine Mischung aus
ai) einem Prepolymer, hergestellt durch Umsetzung von MDI mit einem Unterschuss eines unpolaren Polyetherpolyols, wobei die Hydroxylzahl des Polyoxypropylen-Polyols oder eines Polyoxyethylen-Polyoxypropylen-Polyols mit einem Gehalt an Ethylenoxid in der Polyetherkette im Bereich von maximal 10 Gew.-% zwischen 30 und 60 mg KOH/g liegt,
aii) einem Prepolymer, hergestellt durch Umsetzung von MDI mit einem Unterschuss eines polaren Polyetherpolyols
eingesetzt wird,
wobei das Gewichtsverhältnis der Prepolymere ai) und aii) in der Komponente a) im Bereich zwischen 70 : 30 und 50 : 50 liegt.

Der NCO-Gehalt der Prepolymere ai) und aii) liegt vorzugsweise im Bereich zwischen 24 und 31 Gew.-%, insbesondere im Bereich zwischen 26 und 30 Gew.-%.

Die zur Herstellung der Prepolymere ai) eingesetzten unpolaren Polyetheralkohole werden, wie oben dargelegt, üblicherweise durch Anlagerung von Propylenoxid oder Gemischen aus Ethylenoxid und Propylenoxid an H-funktionelle Startsubstanzen, wobei bei Einsatz der genannten Gemische die Menge an Ethylenoxid in der Polyetherkette von maximal 10 Gew.-%. bezogen auf die Gesamtmenge des eingesetzten Alkylenoxids, beträgt, hergestellt. Bevorzugt ist der Einsatz von reinen Polypropylenoxid-Polyetheralkoholen. Als H-funktionelle Startsubstanzen werden mindestens zweifunktionelle, vorzugsweise dreifunktionelle Alkohole, insbesondere Glyzerin und/oder Trimethylolpropan (TMP), eingesetzt. Die Hydroxylzahl der genannten Polyetheralkohole liegt im Bereich zwischen 30 und 60 mgKOH/g, insbesondere im Bereich zwischen 40 und 50 mgKOH/g.

Als MDI können die Isomeren des Zweikern-MDI, auch als monomeres MDI bezeichnet, allein oder im Gemisch mit Polyphenylen-polymethylen-polyisocyanaten (Roh-MDI) eingesetzt werden. Bei der Verwendung der genannten Gemische liegt der Anteil an monomerem MDI im Gemisch vorzugsweise im Bereich zwischen 60 und 90 Gew.-%, bezogen auf die Menge des eingesetzten Isocyanats. Der Anteil des 2,4'-Isomeren des MDI liegt vorzugsweise im Bereich zwischen 20 und 30 Gew.-%, der Anteil des 4,4'-Isomeren des MDI liegt vorzugsweise im Bereich zwischen 40 und 50 Gew.-%, jeweils bezogen auf die Gesamtmenge des eingesetzten Isocyanats Der NCO-Gehalt der Prepolymere aii) liegt ebenfalls vorzugsweise im Bereich zwischen 24 und 31 Gew.-%, insbesondere im Bereich zwischen 26 und 30 Gew.-%.

Die zur Herstellung der Prepolymere aii) eingesetzten polaren Polyetheralkohole werden, wie oben dargelegt, üblicherweise durch Anlagerung von Gemischen aus Ethylenoxid und Propylenoxid an H-funktionelle Startsubstanzen, wobei die Menge des Ethylenoxids in der Polyetherkette mindestens 60 Gew.-%, insbesondere 60 bis 80 Gew.-%, vorzugsweise 60 bis 70 Gew.-%, bezogen auf die Gesamtmenge des eingesetzten Alkylenoxids, beträgt, hergestellt. Als H-funktionelle Startsubstanzen werden mindestens zweifunktionelle, vorzugsweise dreifunktionelle Alkohole, insbesondere Glyzerin und/oder Trimethylolpropan (TMP), eingesetzt. Die Hydroxylzahl der genannten Polyetheralkohole liegt vorzugsweise im Bereich zwischen 20 und 60 mgKOH/g, insbesondere im Bereich zwischen 30 und 50 mgKOH/g.

Als MDI können vorzugsweise die oben beschriebenen Verbindungen und Gemische eingesetzt werden.

Das Gewichtsverhältnis der Prepolymere ai) und aii) in der Komponente a) liegt im Bereich zwischen 70 : 30 und 50 : 50, wobei ein Verhältnis zwischen 55 : 45 und 50: 50 bevorzugt ist.

Die Herstellung der Prepolymere ai) und aii) erfolgt nach üblichen und bekannten Verfahren durch Umsetzung der genannten Isocyanate mit einem Unterschuss der genannten Polyetheralkohole. Die Umsetzung erfolgt zumeist in Anwesenheit der bekannten Urethan-Katalysatoren. Zumeist wird bei der Herstellung das Polyol vorgelegt und das Isocyanat unter Rühren dazudosiert. An die Umsetzung schließt sich vorzugsweise eine Nachreaktionsphase an. Die Umsetzung findet bei den üblichen Temperaturen, zumeist zwischen 60 und 100°C, statt.

Die Prepolymere ai) und aii) sind bei Raumtemperatur flüssig und leicht zu handhaben.

Zur Herstellung der erfindungsgemäßen Weichschaumstoffe werden die Prepolymere ai) und aii) mit den Verbindungen mit mindestens zwei mit Isocyanatgruppen reaktiven Wasserstoffatomen b) umgesetzt. Die Umsetzung findet, wie oben dargelegt, in Anwesenheit von Wasser als Treibmittel statt. Außerdem kann die Umsetzung unter Mitverwendung von Katalysatoren sowie gegebenenfalls Co-Treibmitteln und üblichen Hilfs- und/oder Zusatzstoffen durchgeführt werden.

Zu den weiteren zur Durchführung des erfindungsgemäßen Verfahrens eingesetzten Verbindungen ist im einzelnen folgendes zu sagen:

Als Verbindung mit mindestens zwei aktiven Wasserstoffatomen b) werden insbesondere Polyesteralkohole und vorzugsweise Polyetherole mit einer Funktionalität von 2 bis 8, insbesondere von 2 bis 4, vorzugsweise 2 bis 3, und einem Molekulargewicht im Bereich von 400 bis 8500, vorzugsweise 1000 bis 6000 eingesetzt. Die Polyetheralkohole können nach bekannten Verfahren, zumeist durch katalytische Anlagerung von Alkylenoxiden insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzte Alkohole sind zweiwertige Alkohole, beispielsweise Ethylenglykol, Propylenglykol, oder Butandiole, dreiwertige Alkohole, beispielsweise Glyzerin, Trimethylolpropan oder Pentaerythrit, sowie höherwertige
Alkohole, wie Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, aromatische Amine, beispielsweise Toluylendiamin oder Diaminodiphenylmethan, sowie Aminoalkohole, wie Ethanolamin oder Diethanolamin.

Als Polyetheralkohole können auch polymermodifizierte Polyetheralkohole eingesetzt werden. Diese werden zumeist durch in-situ-Polymerisation von olefinisch ungesättigten Monomeren, insbesondere Acrylnitril und/oder Styrol, in den Polyetheralkoholen hergestellt. Zu den polymermodifizierten Polyetheralkoholen gehören auch Polyharnstoffdispersionen enthaltende Polyetheralkohole.

Für bestimmte Einsatzgebiete kann es zweckmäßig sein, zur Herstellung der Polyurethan-Weichschaumstoffe neben den genannten Polyhydroxylverbindungen zusätzlich sogenannte Kettenverlängerungsmittel und/oder Vernetzungsmittel mitzuverwenden. Als derartige Mittel kommen polyfunktionelle, insbesondere di- und trifunktionelle Verbindungen mit Molekulargewichten von 62 bis 600, vorzugsweise 62 bis 300, in Betracht. Verwendet werden beispielsweise Di- und Trialkanolamine, wie Diethanolamin und Triethanolamin, aliphatische und aromatische Diamine, wie z. B. Ethylendiamin, Butylendiamin, Butylendiamin-1,4, Hexamethylendiamin-1,6, 4,4'-Diamino-diphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Ethylenglykol, Propylenglykol, 1,4'-Butylenglykol, 1,6-Hexamethylenglykol, Glyzerin 25 und Trimethylolpropan.

Sofern Kettenverlängerungs- oder Vernetzungsmittel eingesetzt werden, kommen diese in Mengen von 1 bis 20 Gew.-Teilen, vorzugsweise von 3 bis 10 Gew.-Teilen pro 100 Gew.-Teile Polyhydroxylverbindungen zur Anwendung.

Als Treibmittel für das erfindungsgemäße Verfahren wird, wie oben ausgeführt, Wasser, das mit Isocyanatgruppen unter Bildung von Kohlendioxid reagiert, eingesetzt. Die Wassermengen, die zweckmäßigerweise verwendet werden, betragen, abhängig von der angestrebten Dichte der Schaumstoffe, 0,1 bis 8 Gewichtsteile, vorzugsweise 1,5 bis 5 Gewichtsteile, bezogen auf 100 Gewichtsteile Polyhydroxylverbindung.

Im Gemisch mit Wasser können gegebenenfalls auch sogenannte physikalisch wirkende Treibmittel eingesetzt werden. Dies sind Flüssigkeiten, welche gegenüber den Rezepturbestandteilen inert sind und Siedepunkte unter 100 °C, vorzugsweise unter 50 °C, insbesondere zwischen -50 °C und 30 °C bei Atmosphärendruck aufweisen, so dass sie unter dem Einfluß der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethlyether und Diethylether, Ketone, wie Aceton und Methylethylkleton, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Polyhydroxylverbindung.

Zur Beschleunigung der Umsetzung zwischen den Polyhydroxylverbindungen, Wasser und gegebenenfalls Kettenverlängerungs- oder Vernetzungsmittel und den Polyisocyanaten werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, Dimethylpiperazin, Pyridin,
1,2-Dimethylimidazol, 1-Azobicyclo-(3,3,0)-octan, Dimethylaminoethanol, 2-(N,N-Dimethyhlaminoethoxy)ethanol, N,N',N"-Tris-(dialkylaminoalkyl)-hexahydrotriazin und insbesondere Triethylendiamin. Geeignet sind jedoch auch Metallsalze, wie Eisen-(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew. %, vorzugsweise 0,5 bis 5 Gew.-% Katalysator auf Basis tertiärer Amine und/oder 0,01 bis 0,5 Gew. %, vorzugsweise 0,05 bis 0,25 Gew.-% Metallsalze, bezogen auf das Gewicht an Polyhydroxylverbindungen.

Der Reaktionsmischung können auch noch Hilfsmittel und/oder Zusatzstoffe einverleibt werden. Genannt seien beispielsweise Stabilisatoren, Hydrolyseschutzmittel, Porenregler, fungistatisch und bakteriostatisch wirkende Substanzen, Farbstoffe, Pigmente, Füllstoffe, oberflächenaktive Stoffe und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester, die in Mengen von 0,2 bis 8, vorzugsweise von 0,5 bis 5 Gewichtsteilen pro 100 Gewichtsteilen Polyhydroxylverbindungen angewandt werden.

Als Flammschutzmittel sind beispielsweise Phosphor- und/oder Halogenatome enthaltende Verbindungen, wie z. B. Trikresylphosphat, Tris-2-chlorethylphosphat, Trischlor-propylphosphat und Tris-2,3-dibrompropylphosphat geeignet.

Außer den bereits genannten halogensubstituierten Phosphaten können auch anorganische Flammschutzmittel, beispielsweise Antimontrioxid, Arsenoxid, Ammoniumphosphat und Calciumsulfat, oder Melamin zum Flammfestmachen der Polyurethanschaumstoffe verwendet werden.

Im allgemeinen hat es sich als vorteilhaft erwiesen, 5 bis 50 Gewichtsteile, vorzugsweise 5 bis 25 Gewichtsteile der genannten Flammschutzmittel pro 100 Gewichtsteile Polyhydroxylverbindung zu verwenden.

Zur Herstellung der Polyurethan-Weichschaumstoffe werden die erfindungsgemäß verwendeten Prepolymere, die Verbindungen mit mindestens zwei mit Isocyanatgruppen reaktiven Wasserstoffatomen in Gegenwart von Katalysatoren, Treibmitteln und gegebenenfalls Hilfsmitteln und/oder Zusatzstoffen bei Temperaturen von 0 bis 70 °C, vorzugsweise 15 bis 50 °C in solchen Mengeverhältnissen zur Reaktion gebracht, dass pro NCO-Gruppe 0,5 bis 2 vorzugsweise 0,8 bis 1,3 und insbesondere ungefähr ein reaktive(s) Wasserstoffatom(e) gebunden an die Polyhydroxylverbindung und gegebenenfalls Kettenverlängerungs- oder Vernetzungsmittel vorliegen und das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die nach dem erfindungsgemäßen Verfahren hergestellten Polyurethan-Weichschaumstoffe besitzen vorzugsweise Dichten von 10 bis 150 kg/m³, insbesondere 20 bis 70 kg/m³, zeichnen sich durch hohe Elastizität und Lunkerfreiheit aus und können insbesondere zu Möbeln oder Matratzen mit einem hohen Sitz- und Liegekomfort verwendet werden. Überraschenderweise können so mit MDI Schaumeigenschaften erzielt werden, wie sie ansonsten nur TDI-Schaumstoffe zeigen.

Das Verfahren zeichnet sich außerdem durch eine sehr geringe Start- und Abbindezeit aus. Aufgrund der verbesserten Reaktivität des Schaumstoff-Systems wird ebenfalls eine schnellere Aushärtung der Schaumstoffe nach der Produktion gefunden. Wird üblicherweise erst nach 48 Stunden Lagerzeit der Schaumstoff weiterverarbeitet, so 30 können die erfindungsgemäßen Schaumstoffe bereits nach 24 Stunden weiterverarbeitet werden.

Die Erfindung soll an den nachfolgenden Beispielen näher erläutert werden.

### 1. Herstellung der Prepolymere

Die in Tabelle 1 angegebenen Mengen an Polyol wurden in einem Rührbehälter vorgelegt und auf 80°C erwärmt und dazu unter Rühren während einer Stunde die angegebenen Mengen Isocyanat dosiert. Nach einer Nachreaktionszeit von einer Stunde ließ man den Reaktionsansatz auf Raumtemperatur abkühlen. Von dem erhaltenen Produkt wurden der NCO-Gehalt und die Viskosität bestimmt. Die erhaltenen Werte finden sich ebenfalls in Tabelle 1.

**Tabelle 1**

| Prepolymer | A | B |
|---|---|---|
| 2-Kern-MDI* [g] | 56 | 52 |
| Polymer-MDI** [g] | 34 | 35 |
| Polyol | Polyol 1 | Polyol 2 |
| Menge des Polyols [g] | 10 | 13 |
| NCO-Gehalt des Prepolymeren [Gew.-%] | 29,1 | 28,3 |
| Viskosität des Prepolymeren bei 25°C [mPa·s] (nach DIN 53019) | 74 | 90 |
| Bei A handelt es sich um ein unpolares, bei B um ein polares Prepolymer | | |
| * 2-Kern-MDI mit einem Gehalt von 50 Gew.-% 4,4'-MDI und 50 Gew.-% 4,4'-MDI | | |
| ** Polymer-MDI, NCO-Gehalt 33,6 Gew.-% (Lupranat® M20 W, BASF Aktiengesellschaft) | | |
| Polyol 1 - Polyetheralkohol aus Glyzerin und Propylenoxid, Hydroxylzahl 42 mgKOH/g | | |
| Polyol 2 - Polyetheralkohol aus Glyzerin und Ethylenoxid und Propylenoxid, Gehalt an Ethylenoxid 75 Gew.-% statistisch eingebaut. Hydroxylzahl 42 mgKOH/g | | |

### Beispiele 1 bis 5 und Vergleichsbeispiele 1 bis 3

Aus den in Tabelle 2 angegebenen Mengen an Lupranol® 2090 der BASF Aktiengesellschaft, Lupranol® 2047 der BASF Aktiengesellschaft, Lupranol® 3093 der BASF Aktiengesellschaft, Lupragen® N203 der BASF Aktiengesellschaft, Lupragen® 204 der BASF Aktiengesellschaf, Lupragen® API der BASF Aktiengesellschaft, Stabilisator Tegostab® B 8616 der Firma Goldschmidt AG und Wasser wurde durch Vermischen eine Polyolkomponente hergestellt. Die in Tabelle 2 angegebenen Mengen dieser Polyolkomponente wurden mit den ebenfalls in Tabelle 1 angegebenen Mengen der Prepolymere A und B durch Rühren vermischt und in ein offenes Behältnis mit den Seitenlängen 40 x 40 cm gegeben. Nach einer Stunde wurde der fertige Schaum entnommen und die mechanischen Werte bestimmt.

**Beispiele / Vergleichsbeispiele**

| | **V1*** | **1** | **2** | **3** | **4** | **5** | **V 2** | **V 3.** |
|---|---|---|---|---|---|---|---|---|
| **Polyol-Komponente** | | | | | | | | |
| Lupranol® 2090 | 97,50 | 97,500 | 97,50 0 | 97,500 | 97,500 | 97,500 | 99,000 | 98,000 |
| Lupranol® 2047 | 4,060 | 4,000 | 4,000 | 5,000 | 5,000 | 5,000 | --- | --- |
| Lupranol® 3903 | --- | --- | --- | --- | --- | --- | 1,000 | 2,000 |
| Tegostab® B 8616 | 0,300 | 0,300 | 0,300 | 0,300 | 0,300 | 0,300 | 0,300 | 0,300 |
| Lupragen® API | 0,380 | 0,380 | 0,380 | 0,380 | 0,380 | 0,380 | 0,380 | 0,380 |
| Lupragen® N203 | 0,380 | 0,380 | 0,380 | 0,380 | 0,380 | 0,380 | 0,380 | 0,380 |
| Lupragen® N206 | 0,240 | 0,240 | 0,240 | 0,240 | 0,240 | 0,240 | 0,240 | 0,240 |
| Wasser | 3,600 | 3,600 | 3,600 | 3,600 | 3,600 | 3,600 | 3,600 | 3,600 |
| | | | | | | | | |
| **Isocyanat**-**Komp**.**:** | | | | | | | | |
| unpolares Isocyanat (A) | 100,0 | 95,0 | 90,0 | 80,0 | 70,0 | 50,0 | 0,0 | 0,0 |
| polares Isocyanat (B) | 0,0 | 5,0 | 10,0 | 20,0 | 30,0 | 50,0 | 100,0 | 100,0 |
| Index | 100,0 | 100,0 | 100,0 | 100,0 | 100,0 | 100,0 | 100,0 | 100,0 |
| Startzeit [sec] | 22 | 20 | 20 | 18 | 16 | 15 | 18 | 18 |
| Abbindezeit [sec] | 135 | 130 | 128 | 120 | 117 | 105 | 100 | 100 |
| Steigzeit [sec] | 200 | 190 | 180 | 157 | 144 | 135 | 140 | 150 |
| | | | | | | | | |
| Raumgewicht [kg/m³] | 36,2 | 35,4 | 35,7 | 35,3 | 36,6 | 36,4 | 42 | 38,9 |
| Zugfestigkeit [N/mm²] | 59 | 62 | 59 | 57 | 55 | 51 | 64 | 58 |
| Bruchdehnung [%] | 94 | 93 | 95 | 96 | 88 | 77 | 62 | 61 |

| **Isocyanat-Komp.:** | | | | | | | | |
|---|---|---|---|---|---|---|---|---|
| Weiterreiß-Graves [N/mm] | 0,32 | 0,3 | 0,35 | 0,29 | 0,28 | 0,27 | 0,3 | 0,28 |
| Stauchhärte 40% [kPa] | 2,3 | 2,1 | 2 | 2,1 | 2,4 | 2,5 | 4,3 | 4,1 |
| DVR 22h/70°C/50% [%] | 2,4 | 2,1 | 1,8 | 2,5 | 2,2 | 1,8 | 2,3 | 2,3 |
| Wet Compression Set | 10,5 | 11,1 | 10,4 | 10,9 | 10,2 | 8,9 | 7,5 | 8,5 |
| Rückprallelastizität [%] | 63 | 63 | 63 | 65 | 65 | 67 | 66 | 65 |
| Lupranol® 2090 - | mit Glyzerin gestartetes Polyoxypropylen-polyoxyethylen-polyol mit einem Anteil von 13,8 Gew.-% Ethylenoxid von der gesamten Alkylenoxidmenge, Hydroxylzahl 28 mgKOH/g | | | | | | | |
| Lupranol® 2047 - | mit Glyzerin gestartetes Polyoxypropylen-polyoxyethylen-polyol mit einem Anteil von 75 Gew.-% Ethylenoxid von der gesamten Alkylenoxidmenge, Hydroxylzahl 42 mgKOH/g | | | | | | | |
| Lupranol® 3903 - | mit Trimethylolpropan gestartertes Polyoxyethylen-polyol, Hydroxylzahl 950 mgKOH/g | | | | | | | |
| Lupragen® API - | Aminopropylimidazol | | | | | | | |
| Lupragen® N203 - | Triethylendiamin, 33 %ig in Ethylenglykol | | | | | | | |
| Lupragen® N206 - | Bis(N,N-dimethylaminoethyl)-ether, 70 %ig in Dipropylenglykol | | | | | | | |

## Patentansprüche

1. Verfahren zur Herstellung von Polyurethan-Weichschaumstoffen durch Umsetzung von
a) Polyisocyanaten mit
b) Verbindungen mit mindestens zwei mit Isocyanatgruppen reaktiven Wasserstoffatomen in Gegenwart von
c) Wasser als Treibmittel,
**dadurch gekennzeichnet, dass** als Polyisocyanate a) eine Mischung aus
ai) einem Prepolymer, hergestellt durch Umsetzung von MDI mit einem Unterschuss eines Polyoxypropylen-Polyols oder eines Polyoxyethylen-Polyoxypropylen-Polyols mit einem Gehalt an Ethylenoxid in der Polyetherkette im Bereich von maximal 10 Gew.-%, wobei die Hydroxylzahl des Polyoxypropylen-Polyols oder eines Polyoxyethylen-Polyoxypropylen-Polyols mit einem Gehalt an Ethylenoxid in der Polyetherkette im Bereich von maximal 10 Gew.-% zwischen 30 und 60 mg KOH/g liegt,
aii) einem Prepolymer, hergestellt durch Umsetzung von MDI mit einem Unterschuss eines Polyoxyethylen-Polyoxypropylen-Polyols mit einem Gehalt an Ethylenoxid in der Polyetherkette von mindestens 60 Gew.-%,
eingesetzt wird,
wobei das Gewichtsverhältnis der Prepolymere ai) und aii) in der Komponente a) im Bereich zwischen 70 : 30 und 50 : 50 liegt.

2. Verfahren nach Anspruch 1, **dadurch gekennzeichnet, dass** die Prepolymere ai) und aii) einen NCO-Gehalt im Bereich zwischen 24 und 31 Gew.-% aufweisen.

3. Verfahren nach Anspruch 1, **dadurch gekennzeichnet, dass** das zur Herstellung der Prepolymere ai) und aii) eingesetzte MDI ein Gemisch aus monomerem und polymerem MDI ist.

4. Verfahren nach Anspruch 1, **dadurch gekennzeichnet, dass** der Anteil an monomerem MDI im Gemisch im Bereich zwischen 60 und 90 Gew.-%, bezogen auf die Menge des eingesetzten Isocyanats, liegt.

5. Polyurethan-Weichschaumstoffe, herstellbar nach einem der Ansprüche 1 bis 4.

## Claims

1. A process for producing flexible polyurethane foams by reacting
a) polyisocyanates with
b) compounds having at least two hydrogen atoms reactive toward isocyanate groups, in the presence of
c) water as blowing agent,
which comprises using, as polyisocyanates a), a mixture composed of
ai) a prepolymer prepared by reacting MDI with a substoichiometric amount of a polyoxypropylene polyol or of a polyoxyethylene polyoxypropylene polyol whose content of ethylene oxide in the polyether chain is in the range of at most 10% by weight, where the hydroxy number of the polyoxypropylene polyol or of a polyoxyethylene polyoxypropylene polyol whose content of ethylene oxide in the polyether chain is in the range of at most 10% by weight is from 30 to 60 mg KOH/g,
aii) a prepolymer prepared by reacting MDI with a substoichiometric amount of a polyoxyethylene polyoxypropylene polyol whose content of ethylene oxide in the polyether chain is at least 60% by weight,
where the ratio by weight of the prepolymers ai) and aii) in component a) is in the range from 70:30 to 50:50.

2. The process according to claim 1, wherein the NCO content of the prepolymers ai) and aii) is in the range from 24 to 31% by weight.

3. The process according to claim 1, wherein the MDI used to prepare the prepolymers ai) and aii) is a mixture of monomeric and polymeric MDI.

4. The process according to claim 1, wherein the proportion of monomeric MDI in the mixture is in the range from 60 to 90% by weight, based on the amount of isocyanate used.

5. The flexible polyurethane foam which can be produced according to any of claims 1 to 4.

## Revendications

1. Procédé pour la production de mousses souples en polyuréthanne, par mise en réaction
a) de polyisocyanates avec
b) des composés comportant au moins deux atomes d'hydrogène réactifs avec des groupes isocyanate, en présence
c) d'eau en tant qu'agent porogène,
**caractérisé en ce qu'**on utilise comme polyisocyanates a) un mélange
ai) d'un prépolymère, préparé par réaction de MDI (diisocyanatodiphénylméthane) avec une quantité insuffisante d'un polyoxypropylène-polyol ou un polyoxyéthylène-polyoxypropylène-polyol ayant une teneur en oxyde d'éthylène dans la chaîne polyéther allant au maximum jusqu'à 10 % en poids, l'indice de groupes hydroxy du polyoxypropylène-polyol ou d'un polyoxyéthylène-polyoxypropylène-polyol ayant une teneur en oxyde d'éthylène dans la chaîne polyéther allant au maximum jusqu'à 10% en poids se situant entre 30 et 60 mg KOH/g,
aii) d'un prépolymère, préparé par réaction de MDI avec une quantité insuffisante d'un polyoxyéthylène-polyoxypropylène-polyol ayant une teneur en oxyde d'éthylène dans la chaîne polyéther d'au moins 60 % en poids,
le rapport pondéral des prépolymères ai) et aii) dans le composant a) se situant dans la plage comprise entre 70:30 et 50:50.

2. Procédé selon la revendication 1, **caractérisé en ce que** les prépolymères ai) et aii) présentent une teneur en NCO dans la plage comprise entre 24 et 31 % en poids.

3. Procédé selon la revendication 1, **caractérisé en ce que** le MDI utilisé pour la préparation des prépolymères ai) et aii) est un mélange de MDI monomère et de MDI polymère.

4. Procédé selon la revendication 1, **caractérisé en ce que** la concentration de MDI monomère dans le mélange se situe dans la plage comprise entre 60 et 90 % en poids, par rapport à la quantité de l'isocyanate utilisé.

5. Mousses souples en polyuréthanne, pouvant être produites selon l'une quelconque des revendications 1 à 4.
